# FASCICULE DE BREVET EUROPEEN

(11) **EP 3 278 314 B1**
(45) Date de publication et mention de la délivrance du brevet: **13.05.2020**
(21) Numéro de dépôt: 16711247.3
(22) Date de dépôt: 18.03.2016
(51) Int. Cl.: G08B 21/18, H04L 12/18

(54) **PROCEDE DE GESTION D'ALERTES RELATIVES A LA DETECTION D'UN PHENOMENE LOCAL**
VERFAHREN ZUR VERWALTUNG VON WARNUNGEN ZUM NACHWEIS EINES LOKALEN PHÄNOMENS
METHOD FOR MANAGING ALERTS RELATING TO THE DETECTION OF A LOCAL PHENOMENON

(30) Priorité: 31.03.2015 FR 1552767
(43) Date de publication de la demande: 07.02.2018
(73) Titulaire: Orange, 75015 Paris (FR)
(72) Inventeur: GLOANEC, Simon, 35000 Rennes (FR); MARCHAND, Hervé, 35770 Vern Sur Seiche (FR)
(86) Numéro de dépôt international: PCT/EP2016/056043
(87) Numéro de publication internationale: WO 2016/156072

(56) Documents cités:
- US-B1- 8 620 841
- US-B1- 8 988 232
- Chris Davies: "Nest Protect smart smoke detector packs WiFi - SlashGear", , 8 octobre 2013 (2013-10-08), pages 1-8, XP055248967, Extrait de l'Internet: URL:http://www.slashgear.com/nest-protect- smart-smoke-detector-packs-wifi-08300586/ [extrait le 2016-02-10]

## Description

### Domaine technique

Le domaine de l'invention est celui des télécommunications et plus précisément celui des équipements sensibles à des dégradations dues à des phénomènes géographiquement localisés.

Plus particulièrement, l'invention concerne la protection de tels équipements contre des détériorations par exemple liées à la foudre.

### Etat de la technique

Un grand nombre de terminaux de télécommunication sont détruits chaque année par des phénomènes locaux, ce qui représente un coût important, notamment pour les opérateurs de télécommunication. Par phénomène local on entend essentiellement les phénomènes naturels de portée géographique limitée, comme la foudre, les incendies, les tremblements de terre, etc. L'invention peut être cependant étendue à d'autres phénomènes locaux non forcément naturels (attaques pirates, etc.)

Dans la suite, on s'intéressera plus particulièrement à la foudre.

Les coups de foudre sont caractérisés par un passage brutal, lors d'une décharge, d'un courant impulsionnel important à l'endroit de la décharge. Le courant électrique de foudre entraîne les mêmes effets que tout autre courant circulant dans un conducteur (effet joule, effet d'induction, etc.) avec un effet direct sur l'équipement atteint mais aussi un effet indirect par induction sur les autres équipements : un coup de foudre peut se propager par guidages ou par rayonnements électromagnétiques et entrainer des surtensions localisées sur les équipements à proximité, via les câbles électriques. Dans le cas d'une passerelle domestique liée à la fois au réseau électrique (pour son alimentation) et au réseau Internet (pour sa communication avec les autres équipements du réseau), le risque de dégradation est élevé.

Un moyen simple de se protéger des effets directs est d'attirer la foudre sur un point précis (par exemple, en utilisant un paratonnerre) de manière à écouler le courant vers le sol, mais ceci ne résout pas le problème de l'induction.

Un autre moyen consiste à débrancher l'équipement menacé afin qu'il ne soit pas dégradé par le courant de foudre. Cependant, pour le débrancher, il faut être au courant de l'approche de la foudre et réagir rapidement, or le phénomène naturel de la foudre est aléatoire. Il en va de même pour les autres phénomènes locaux de type incendie, qu'ils soient naturels ou non.

Afin de faire connaître l'imminence de la foudre, un certain nombre de systèmes de détection sont proposés. Par exemple, le réseau *Météorage* est un réseau national de surveillance des orages couvrant l'ensemble des territoires français et limitrophe. Il est composé d'un ensemble de stations de détection qui détectent les coups de foudre et envoient leurs informations à un centre de traitement en temps réel. Dès qu'une station capte un signal électromagnétique, elle détermine la direction de l'éclair et transmet immédiatement cette information au centre opérationnel *Météorage.* Il s'agit donc d'un système centralisé de prévention. Ce système est complexe à mettre en œuvre, car il nécessite un ensemble de stations et un serveur centralisé. Il suppose de surcroît que la connexion reste valide pour la communication entre les stations de détection et le serveur. Or, la foudre pouvant dégrader partiellement la carte réseau de ces équipements, ils ne disposent peut-être plus de connexion au moment où la panne survient, ce qui les empêche de communiquer avec un serveur centralisé.

La publication "Nest Protect smart smoke detectors packs WiFi" (XP55248967) et le brevet US8,988,232 traitent de la transmission des messages d'alerte.

De surcroît, les phénomènes de foudre sont très localisés géographiquement. Souvent, il est donc inutilement complexe de disposer d'une surveillance de grande portée géographique.

L'invention offre une solution ne présentant pas les inconvénients de l'état de la technique.

### L'invention

L'invention est réalisée selon les revendications annexées.

Selon un premier mode de mise en œuvre particulier, le procédé tel que décrit ci-dessus est en outre caractérisé en ce que le message est émis au moyen d'un canal de communication radio et la seconde passerelle domestique est voisine de la premiére si elle se trouve dans la portée de la communication radio.

Avantageusement, l'émission du message d'alerte peut être ainsi naturellement limitée aux équipements qui se trouvent à proximité de l'équipement émetteur, puisque le support physique du message, c'est-à-dire la portée du canal de communication radio, est limité en distance : par exemple, un message diffusé sur une liaison sans fil (Wifi, DECT, etc.) ne peut dépasser quelques dizaines de mètres et atteint seulement les équipements qui se trouvent dans la portée de la communication radio. Par exemple, la portée atteint en WIFI plusieurs dizaines de mètres en intérieur et une centaine de mètres en extérieur. La portée définit aussi ce qu'on appelle la zone de couverture de l'émetteur des messages. Dans un tel cas de message diffusé, il est inutile de calculer la distance entre les deux équipements, puisque seuls les équipements proches seront automatiquement atteints par le message diffusé.

Selon une variante de ce premier mode de mise en œuvre particulier, le procédé tel que décrit ci-dessus est en outre caractérisé en ce que le message d'alerte est diffusé dans le réseau domestique de la première passerelle domestique.

Avantageusement selon cette variante, le message d'alerte peut être diffusé non seulement dans le réseau étendu (WAN) mais aussi dans le réseau local (LAN) piloté la passerelle domestique, de manière à ce que les équipements du réseau local soient avertis du phénomène local et que l'utilisateur puisse agir en conséquence.

Selon un deuxième mode de mise en œuvre particulier, le procédé tel que décrit ci-dessus est en outre caractérisé en ce qu'il comporte une étape d'obtention d'au moins un identifiant d'une passerelle domestique voisine situé à une distance inférieure à une distance seuil.

Ce mode de mise en œuvre de l'invention permet d'obtenir les identifiants de tous les équipements voisins, ou à proximité du premier, par exemple dans un rayon de cent mètres, pour transmettre le message d'alerte à tous ces équipements, susceptibles d'être également endommagés par le phénomène local (e.g. la foudre) qui vient d'atteindre le premier équipement ou de lui être signalé. La distance seuil peut être définie notamment par l'opérateur de télécommunications qui fixe ainsi de manière non ambiguë la notion de voisinage : avant d'émettre un message d'alerte, l'équipement adresse par exemple une requête à un serveur de l'opérateur, qui lui transmet en réponse une liste d'équipements voisins (définis par exemple par une adresse sur le réseau). Cette obtention peut aboutir à une définition plus précise des équipements voisins que dans le premier mode de mise en œuvre par diffusion des messages d'alerte sur un canal radio (WiFI, DECT), puisque la portée d'un tel canal dépend des conditions environnementales (obstacles, conditions météorologiques, etc.).

Selon un troisième mode de mise en œuvre particulier, qui pourra être mis en œuvre alternativement ou cumulativement avec les précédents, un procédé tel que décrit ci-dessus est en outre caractérisé en ce que l'étape de détection d'une dégradation est réalisée directement par la première passerelle domestique.

Selon ce mode de réalisation, c'est l'équipement émetteur lui-même qui détecte la dégradation dont il a été victime (e.g. courant de foudre entraînant une surtension et une dégradation de ses circuits électroniques). Ainsi, le premier équipement qui est victime du phénomène local (coup de foudre, incendie, surtension, etc.) peut le transmettre aux équipements voisins qui sont prévenus de la proximité géographique du phénomène et peuvent en informer leur utilisateur.

Selon un quatrième mode de mise en œuvre particulier, qui pourra être mis en œuvre alternativement ou cumulativement avec les précédents, un procédé tel que décrit ci-dessus est en outre caractérisé en ce que l'étape de détection d'une dégradation est réalisée par réception d'au moins un message d'alerte.

Dans ce mode de réalisation, l'équipement n'est pas frappé directement par le phénomène local mais prévenu de son imminence par un message d'alerte. Ainsi, un second équipement qui est prévenu de la proximité de la foudre par un message d'alerte émis par un premier équipement selon le procédé peut-il se positionner lui-même en tant que premier équipement selon l'invention et retransmettre le message d'alerte à un troisième équipement voisin. L'information peut ainsi se propager de proche en proche (de manière récursive, par des sauts, ou « hops » en anglais entre équipements voisins) via un réseau d'équipements.

Selon un cinquième mode de mise en œuvre particulier, qui pourra être mis en œuvre alternativement ou cumulativement avec les précédents, un procédé tel que décrit ci-dessus est en outre caractérisé en ce que le message d'alerte comprend une identification unique du message.

Dans ce mode de réalisation, l'identification unique du message permet notamment à un équipement positionné en récepteur de reconnaître le message qu'il a lui-même émis lorsqu'il lui revient par une mise en œuvre du procédé de l'invention sur un équipement émetteur à proximité. Il serait en effet inutile et coûteux de traiter ce message une seconde fois, et éventuellement de le réémettre, ce qui peut entraîner un phénomène de bouclage.

Selon un sixième mode de mise en œuvre particulier, qui pourra être mis en œuvre alternativement ou cumulativement avec les précédents, un procédé tel que décrit ci-dessus est en outre caractérisé en ce que le message d'alerte comprend un compteur relatif au nombre de réémissions maximum du message d'alerte.

Il est ainsi possible, selon ce mode de réalisation, de limiter la propagation de proche en proche de l'information relative au phénomène local. On peut par exemple décider qu'une information transmise trois fois de proche en proche dans le réseau aura raisonnablement atteint tous les équipements susceptibles d'être concernés dans un périmètre géographique donné autour de l'équipement qui a été atteint par la foudre. Dans ce cas, le compteur du nombre de réémissions sera initialisé à la valeur trois par l'équipement touché par la foudre.

Selon une variante de ce mode de mise en œuvre particulier, un procédé tel que décrit ci-dessus est en outre caractérisé en ce que le message d'alerte est réémis par une passerelle domestique réceptrice tant que le nombre de réémission n'a pas atteint une valeur seuil.

Cette variante de mise en œuvre de l'invention permet à un équipement récepteur de mettre à jour, par exemple en le décrémentant, la valeur du compteur de réémission, afin que la propagation de l'alerte reste limitée à un certain voisinage géographique. Lorsque le compteur atteint une valeur seuil prédéfinie, typiquement zéro dans le cas d'une décrémentation, le message n'est pas réémis, et la propagation de l'alerte s'arrête automatiquement.

Selon un septième mode de mise en œuvre particulier, qui pourra être mis en œuvre alternativement ou cumulativement avec les précédents, un procédé tel que décrit ci-dessus est en outre caractérisé en ce que qu'il comporte
- une étape de localisation de la première passerelle domestique ;
- une étape de transmission de cette localisation en association avec le message d'alerte.

Ce mode de réalisation de l'invention permet, par la connaissance d'une ou plusieurs localisations d'équipement dégradés par le phénomène local, de calculer un certain nombre de paramètres du phénomène afin d'en informer l'utilisateur (distance de l'orage, vitesse et direction de propagation, etc.)

Selon un aspect matériel l'invention concerne également un dispositif apte à émettre des messages d'alertes relatives à la détection d'un phénomène local dans un réseau de communication étendu, le phénomène local étant susceptible de dégrader les ressources matérielles et/ou logicielles d'une première passerelle domestique comportant le dispositif, caractérisé en ce qu'il comporte les modules suivants :
- un module de détection d'une dégradation liée au phénomène local ;
- un module d'émission locale dans le réseau d'un message d'alerte pour une prise en charge du phénomène local par au moins une seconde passerelle domestique apte à recevoir le message d'alerte, voisine de la première passerelle domestique dans le réseau étendu.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également une passerelle domestique comprenant un dispositif tel que décrit ci-dessus.

Selon un autre aspect matériel, l'invention concerne également un programme d'ordinateur apte à être mis en œuvre par un procédé de gestion d'alertes tel que décrit ci-dessus.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

L'invention sera mieux comprise à la lecture de la description qui suit, donnée à titre d'exemple et faite en référence aux dessins annexés.

### Les figures:

- la figure 1 représente une configuration de réseau comportant trois passerelles domestiques ;
- la figure 2 est une vue schématique d'une passerelle domestique selon un mode de réalisation de l'invention ;
- la figure 3 représente les étapes du procédé selon un mode de réalisation particulier.

### Description détaillée d'un exemple de réalisation illustrant l'invention

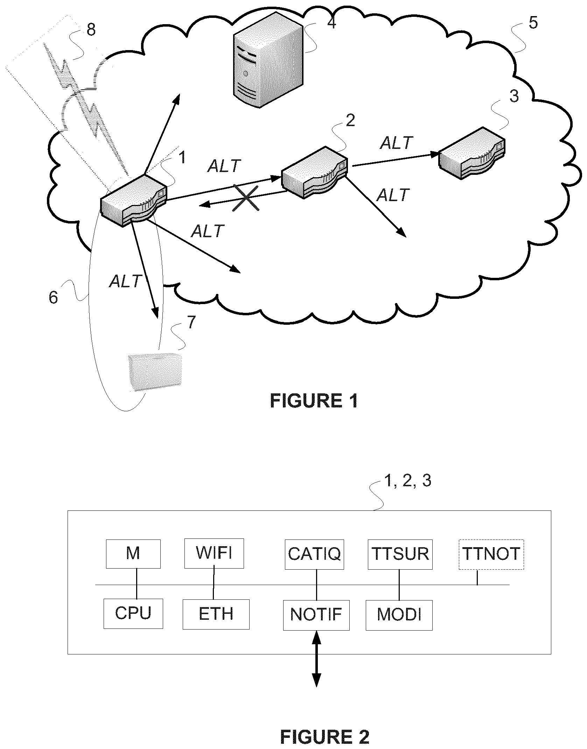

La figure 1 représente une configuration de réseau comportant trois passerelles domestiques (1,2,3) reliées chacune à un réseau local (6, représenté seulement pour la passerelle 1). On rappelle qu'un réseau local, aussi appelé réseau domestique, est un réseau informatique qui relie ensemble, avec ou sans fil, des terminaux (ordinateurs, périphériques d'impression, de restitution, de stockage, équipements domotiques, etc.) d'une maison aptes à communiquer ensemble. Un réseau domestique comporte généralement un équipement routeur, aussi communément appelé passerelle domestique, ou passerelle de service, élément intermédiaire assurant la redirection, ou routage, des paquets de données entre les différents terminaux et les réseaux (réseau étendu et réseau local) qui lui sont connectés. Un tel réseau domestique connecte souvent les différents terminaux en utilisant la technologie WiFi. On rappelle ici que l'appellation Wifi (pour « Wireless Fidelity ») rassemble des technologies de transmission sans fil permettant de créer des réseaux informatiques sans fil basés sur les normes de la famille IEEE 802.11. Le réseau est dans cet exemple de type « IP ». Le réseau local de la passerelle 1 comporte dans cet exemple un congélateur (7). Selon cet exemple, la passerelle de service (1) comporte une fonction de communication WiFi qui lui permet de communiquer sans fil avec les terminaux du réseau local, et une liaison de type ADSL qui lui permet de communiquer avec le réseau Internet étendu. Alternativement, on pourra utiliser une technologie radio de type DECT, qui présente sur le WIFI un certain nombre d'avantages : meilleure portée et robustesse, consommation réduite (en particulier par utilisation des spécifications de DECT-ULE). Le DECT (pour Digital Enhanced Cordless Telephone) est une norme de téléphonie sans-fil numérique sur une gamme de fréquence micro-ondes, utilisée notamment pour les communications vocales. La norme « DECT Ultra Low Energy » (en abrégé DECT ULE) est une extension de la norme de communication sans fil DECT pour les applications à basse énergie.

Les passerelles (1,2,3) sont contrôlées par le serveur (4) (ou un ensemble de serveurs) de l'opérateur de télécommunication. Un tel serveur est notamment apte à charger les différents programmes logiciels nécessaires à l'invention sur les passerelles domestiques, à leur fournir des coordonnées géographiques, les identifiants des passerelles voisines, etc.

Selon ce mode de réalisation, la première passerelle (1) est frappée par la foudre. La passerelle (1) détecte le courant de foudre, par exemple par l'utilisation d'un module logiciel et / ou matériel spécifique apte à détecter une surtension générée par ce courant de foudre sur l'une des cartes électroniques (voir figure 2 pour un exemple de description d'un tel module).

La première passerelle émet alors, par utilisation de son module Wifi, un message d'alerte. Ce message est de type diffusé. Ce message comporte typiquement un identifiant unique du message, un type de message et un compteur du nombre de réémissions. On suppose dans cet exemple que ce compteur est positionné à la valeur 2, ce qui signifie que le nombre d'émissions sera de deux au maximum à partir de la première passerelle. Ce message atteint les passerelles voisines, c'est-à-dire dans cet exemple celles qui se trouvent dans la portée radio du Wifi (une centaine de mètres environ). On notera que ce message atteint aussi les terminaux du réseau local, c'est à dire tout dispositif apte à se connecter à la passerelle (6) dans le contexte du réseau local, tel un ordinateur ou un dispositif du type téléviseur (TV), ordinateur personnel (PC), Smartphone (téléphone mobile intelligent), PDA (« Personnal Digital Assistant »), appareil domestique connecté (réfrigérateur, congélateur, radiateur, etc.) ou plus généralement tout dispositif apte à communiquer avec ou sans fil avec une passerelle de service. Dans cet exemple, le congélateur (7), recevant ce message d'alerte diffusé, peut par exemple prévenir l'utilisateur de la mise en péril de son contenu par l'imminence de la foudre. L'utilisateur peut prendre les mesures qui s'imposent.

Un message diffusé en WiFI peut prendre par exemple la forme d'une trame balise (nommée *beacon* en anglais).

Si la technologie DECT est utilisée, il est également possible de diffuser de tels messages.

La deuxième passerelle (2) reçoit l'alerte diffusée par l'intermédiaire de son module WiFi. Elle prend sur réception d'un tel message un certain nombre de mesures qui ont été prévues dans sa configuration : par exemple, elle prévient l'utilisateur qui peut prendre les mesures adéquates pour protéger ses équipements. Alternativement, elle peut aussi couper automatiquement la ligne ADSL (via un module de désactivation physique de la ligne). Elle décrémente le compteur de réémissions avant de l'insérer dans un message d'alerte identique par ailleurs à celui qu'elle a reçu. Ce message est diffusé par l'intermédiaire du module WiFi et atteint les passerelles voisines. Il atteint notamment, dans notre exemple, les première et troisième passerelles (1,3). La passerelle 1 ne le traite pas car elle reconnaît l'alerte qu'elle a elle-même émise grâce à l'identifiant unique du message. Ceci lui évite de traiter l'information une seconde fois (la foudre ne tombant jamais deux fois au même endroit), et surtout de réémettre le message.

La troisième passerelle (3) reçoit le message d'alerte, prend les actions qui s'imposent sur réception d'un tel message (signal d'alerte à l'intention de l'utilisateur via une interface graphique ou audio, isolation de la ligne, etc.) et décrémente le compteur de réémission qui atteint alors la valeur 0. Selon cet exemple, la passerelle (3) prend les mesures qui s'imposent pour sa protection, mais ne réémet pas le message car le nombre maximum de réémissions (2) a été atteint.

La figure 2 est une vue schématique d'une passerelle domestique selon l'invention, comme par exemple l'une des passerelles de service (1, 2, 3) de la figure 1.

Elle comprend, classiquement, des mémoires (M) associées à un processeur (CPU). Les mémoires peuvent être de type ROM (de l'anglais Read Only Memory) ou RAM (de l'anglais Random Access Memory) ou encore Flash. La passerelle communique avec le réseau local et le réseau Internet étendu via le module Ethernet (ETH) d'une part et éventuellement le module WIFI pour une communication sans fil. La passerelle de service comprend en outre, conformément à l'invention, plusieurs modules hardware et software, lui permettant de relayer des messages d'alerte sur les autres passerelles voisines ou équipements à proximité (dans le réseau local) afin que l'utilisateur soit averti du risque encouru par ses équipements (e.g. une autre passerelle domestique, ou un congélateur d'un réseau local, etc.) et prenne les dispositions adéquates. Par exemple sur la figure 2, cette fonction est rendue par les modules suivants :
- un module CATIQ compatible avec la technologie du même nom pour les communications sans fil compatibles avec la norme DECT. CAT-iq (Cordless Advanced Technology-internet and quality) est une technologie initiée par le forum DECT dans le but de proposer de nouvelles capacités pour les communications domestiques ; elle offre notamment, via des profils et des messages normalisés, des possibilités de gestion de la communication audio mais aussi de contrôle de capteurs dans le réseau local, etc. Notamment, la norme DECT-ULE fait partie des spécifications de CAT-iq (version 4.0) et est particulièrement bien adapté aux services de type domotique (puisque basse consommation). Ce module est optionnel dans le cas où le module WIFI est utilisé (et inversement).
- un module TTSUR de traitement des surtensions sur les cartes électroniques de la passerelle domestique ; ce module permet notamment de détecter l'incidence de la foudre.
- un module logiciel TTNOT apte à réaliser un certain nombre d'actions à réaliser sur réception d'un message d'alerte (par exemple : isolation de la ligne ADSL, mise hors tension, avertissement sonore ou visuel de l'utilisateur, etc.). Ce module, optionnel, peut être configuré avant la mise en œuvre de l'invention à proprement parler. S'il n'est pas présent, les actions à réaliser sont automatiques (e.g. coupure systématique de la ligne ADSL).
- un module logiciel NOTIF apte à émettre des messages d'alerte en utilisant l'un des modules de communication à sa disposition : soit le module WiFI pour une communication de messages d'alertes WiFI, soit le module CATIQ pour une communication de type DECT (il est possible en utilisant CATIQ de transmettre des messages vers les équipements du réseau local mais aussi vers les autres passerelles domestiques, à condition qu'elles se trouvent dans la portée des communications DECT, qui est plus élevée que celle du WiFI). Un tel message peut s'insérer dans un profil de la norme CAT-iq.
- un module MODI apte à réaliser une isolation physique de la ligne ADSL, soit sur intervention de l'utilisateur après qu'il a été prévenu de l'imminence d'un coup de foudre, soit automatiquement sur réception d'un message d'alerte.

La passerelle de service selon l'invention peut aussi contenir d'autres modules comme un disque dur non représenté pour le stockage, d'autres modules lui permettant de communiquer avec l'extérieur via différents protocoles sur différents liens physiques, etc.

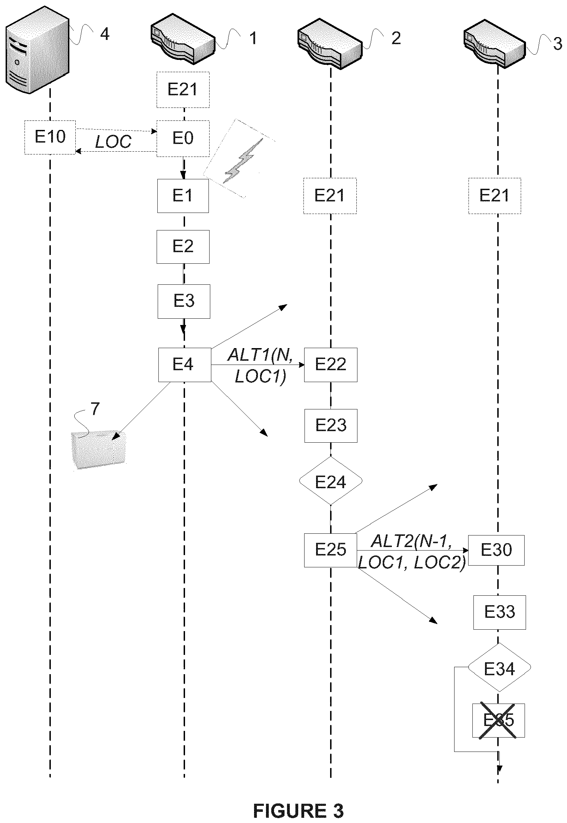

La figure 3 représente les étapes du procédé selon un mode de réalisation particulier de l'invention. Elle reprend le contexte du mode de réalisation proposé à la figure 1.

Lors d'une étape E0 optionnelle, le serveur 4 de l'opérateur en charge des passerelles domestiques (1,2,3) détermine les coordonnées géographiques de la première passerelle (1) à l'aide de son adresse, ou de son identification, transmise avec le message. Cette étape peut être simplement réalisée en consultant la base de données de l'opérateur Internet.

Lors d'une étape E1, la première passerelle (1) est touchée par la foudre.

Lors d'une étape E2, le module TTSUR de détection des surtensions de la première passerelle (1) identifie une dégradation sur une carte électronique, liée à la foudre.

Lors d'une étape E3, la passerelle prépare un message d'alerte à destination des passerelles voisines, et optionnellement des autres équipements de son réseau local (terminaux, capteur, etc.). Ce message d'alerte comporte par exemple les champs suivants :
- Type de message (Surtension foudre, incendie, tremblement de terre, etc.) ;
- identifiant unique de message, afin qu'une réémission vers la passerelle émettrice ne soit pas prise en compte (ou alternativement, identification de la passerelle émettrice) ;
- compteur N de nombre maximum de retransmissions afin de limiter le nombre d'envois successifs de messages d'alerte entre les passerelles ;
- optionnellement, date et heure du message ;
- optionnellement, localisation (LOC1) de la passerelle émettrice (par exemple ses coordonnées GPS). Cette localisation peut être obtenue en contactant les serveurs (4) de l'opérateur ; par exemple la passerelle contacte un premier serveur d'identification (de type « Wassup ») pour obtenir son adresse, puis un second serveur pour effectuer la transformation de l'adresse obtenue en coordonnées géographiques, par exemple GPS. Ces coordonnées sont alors conservées dans la passerelle pour exploitation ultérieure. En disposant des coordonnées GPS de la passerelle et en les véhiculant dans le message d'alerte, il est possible, pour le récepteur, de calculer la proximité de la foudre et d'en informer l'utilisateur. En utilisant les coordonnées GPS véhiculées par plusieurs messages d'alertes reçus de différentes passerelles, il est également possible de calculer si l'orage se rapproche ou s'éloigne, à quelle vitesse il se déplace, etc., pour enrichir les notifications présentées à l'utilisateur.

Selon une variante non représentée, il est également possible de prévoir une solution centralisée pour les passerelles disposant toujours d'une connexion avec le réseau WAN. C'est alors le serveur central qui propage les alertes dans une zone géographique définie autour des passerelles ayant relayé une alerte à la foudre, grâce aux coordonnées GPS calculées.

Lors d'une étape E4, le message d'alerte est émis (diffusé ou transmis en point à point si la variante proposée ci-dessus est utilisée) via le module NOTIF de la passerelle, soit en WiFI, soit en DECT via le module CATIQ.

Selon une variante non représentée, la passerelle domestique identifie les passerelles voisines ; cette variante permet de connaître les passerelles à proximité et de leur adresser le message en mode point à point (et non diffusé). Cette opération peut être effectuée en contactant les serveurs (4) de l'opérateur ; par exemple la passerelle contacte un des serveurs de l'opérateur qui lui renvoie une liste des passerelles voisines, sous forme d'un identifiant unique de passerelle (adresse IP, SSID, etc.).

Lors d'une étape E22 la seconde passerelle domestique (2), qui est voisine de la première, reçoit le message d'alerte, grâce à son module de réception radio (WiFI ou CAT-iq).

Lors d'une étape E21 préalable et optionnelle, la passerelle 2 a fait l'acquisition des règles à observer en cas de réception d'un tel message. Ces règles lui permettent d'effectuer l'action appropriée lors de l'étape E22 : par exemple, la passerelle notifie l'utilisateur de la présence de la foudre à proximité. Cette notification peut être présentée sur l'écran de la passerelle ou sur un téléviseur associé à la passerelle (à condition d'avoir les moyens logiciels correspondants), ou sur un afficheur du congélateur ; selon une variante, la passerelle peut aussi se protéger d'elle-même (cette variante étant, de préférence, autorisée par l'utilisateur).

Lors d'une étape E23, la passerelle décrémente le compteur N de réémission, puis en teste la valeur ; si la valeur du compteur n'est pas nulle, cela signifie que le nombre maximal de réémissions n'est pas encore atteint, et de ce fait la passerelle retransmet aux terminaux à proximité le message d'alerte de la même manière que la première passerelle à l'étape E4 (seule la valeur du compteur change dans cet exemple).

Au contraire, si la valeur du compteur est nulle (E33, E34), la passerelle traite l'information contenue dans le message (notification de l'utilisateur, etc.) mais ne propage pas l'information puisque ne réémet pas le message d'alerte. C'est le cas de la troisième passerelle (3) aux étapes E30 à E34 (l'étape E35 n'est pas effectuée).

Il va de soi que le mode de réalisation qui a été décrit ci-dessus a été donné à titre purement indicatif et nullement limitatif.

## Revendications

1. Procédé de gestion d'alertes relatives à la détection d'un phénomène local dans un réseau de communications étendu (5) comprenant au moins une première passerelle domestique (1,2) et une seconde passerelle domestique (2,3) dite voisine de ladite première passerelle domestique, lesdites passerelles comportant chacune un module de communication radio (Wi-FI, DECT) pour communiquer sans fils , le phénomène local étant susceptible de dégrader les ressources matérielles et/ou logicielles de la première ou la seconde passerelle domestique, ou le procédé réalise les étapes suivantes :
- détection (E1, E22) par la première passerelle domestique (1,2) d'une dégradation liée au phénomène local ;
- émission (E4, E25) par ladite première passerelle domestique (1,2) d'un message d'alerte (ALT1, ALT2) sur le module de communication radio pour une prise en charge du phénomène local par au moins la seconde passerelle domestique (2,3) voisine de ladite première passerelle domestique, le message d'alerte (ALT) comprenant :
- une localisation de la première passerelle domestique (E0) et
- un compteur (N) relatif au nombre de réémissions maximum du message d'alerte ;
- réception, par ladite seconde passerelle domestique, du message d'alerte, et si la valeur du compteur (N) n'a pas atteint une valeur seuil (E24) :
- modification (E24) de la valeur du compteur ;
- ré-émission (E25) par ladite seconde passerelle domestique (1,2) du message d'alerte (ALT1, ALT2) sur le module de communication radio.

2. Procédé de gestion d'alertes selon la revendication 1, **caractérisé en ce que** la seconde passerelle domestique (2,3) est voisine de la première (1,2) si elle se trouve dans la portée de la communication radio.

3. Procédé de gestion d'alertes selon la revendication 1, **caractérisé en ce qu'**il comporte une étape d'obtention d'au moins un identifiant d'une passerelle domestique voisine situé à une distance inférieure à une distance seuil.

4. Procédé de gestion d'alertes selon la revendication 1, **caractérisé en ce que** l'étape de détection d'une dégradation (E1) est réalisée directement par la première passerelle domestique (1).

5. Procédé de gestion d'alertes selon la revendication 1, **caractérisé en ce que** l'étape de détection d'une dégradation (E21, E30) est réalisée par réception d'au moins un message d'alerte (ALT1, ALT2).

6. Procédé de gestion d'alertes selon la revendication 1, **caractérisé en ce que** le message d'alerte (ALT) comprend une identification unique du message.

7. Dispositif apte à émettre des messages d'alertes relatives à la détection d'un phénomène local dans un réseau de communications étendu (5), le phénomène local étant susceptible de dégrader les ressources matérielles et/ou logicielles d'une première passerelle domestique (1,2), comportant les modules suivants :
- un module de détection (TTSUR) d'une dégradation liée au phénomène local ;
- un module (WiFI, DECT, CATIQ, NOTIF) d'émission d'un message d'alerte (ALT) pour une prise en charge du phénomène local par au moins une seconde passerelle domestique (2,3), voisine de la première passerelle domestique (1,2), le message d'alerte (ALT) comprenant :
- une localisation de la première passerelle domestique (E0) et
- un compteur (N) relatif au nombre de réémissions maximum du message d'alerte ;
- un module pour vérifier que la valeur du compteur (N) relatif au nombre de réémissions maximum du message d'alerte n'a pas atteint une valeur seuil (E24) ;
- un module pour modifier (E24) la valeur du compteur.

8. Passerelle domestique (1,2,3) comprenant un dispositif selon la revendication 7.

9. Programme d'ordinateur comportant des instructions de code pour la mise en œuvre du procédé de gestion d'alertes conforme à la revendication 1, lorsque celle-ci est exécutée par un processeur.

## Patentansprüche

1. Verfahren zur Verwaltung von Warnungen in Bezug auf die Detektion einer lokalen Erscheinung in einem Weitverkehrs-Kommunikationsnetzwerk (5) umfassend mindestens einen ersten Heimgateway (1, 2) und einen zweiten Heimgateway (2, 3), der dem ersten Heimgateway benachbart ist, die Gateways jeweils aufweisend ein Funkkommunikationsmodul (Wi-FI, DECT), um drahtlos zu kommunizieren, wobei die lokale Erscheinung die Hardware- und/oder Softwareressourcen des ersten oder zweiten Heimgateways verschlechtern kann, wo das Verfahren die folgenden Schritte durchführt:
- Detektieren (E1, E22), durch den ersten Heimgateway (1, 2), einer Verschlechterung in Verbindung mit der lokalen Erscheinung;
- Senden (E4, E25), durch den ersten Heimgateway (1, 2), einer Warnmeldung (ALT1, ALT2) auf dem Funkkommunikationsmodul für eine Übernahme der lokalen Erscheinung durch zumindest den zweiten Heimgateway (2, 3), der dem ersten Heimgateway benachbart ist, die Warnmeldung (ALT) umfassend:
- eine Lokalisierung des ersten Heimgateways (E0), und
- einen Zähler (N) bezogen auf die maximale Anzahl von Neusendungen der Warnmeldung;
- Empfangen, durch den zweiten Heimgateway, der Warnmeldung, und wenn der Wert des Zählers (N) einen Schwellenwert (E24) nicht erreicht hat:
- Ändern (E24) des Werts des Zählers;
- erneutes Senden (E25), durch den zweiten Heimgateway (1, 2), der Warnmeldung (ALT1, ALT2) auf dem Funkkommunikationsmodul.

2. Verfahren zur Verwaltung von Warnungen nach Anspruch 1, **dadurch gekennzeichnet, dass** der zweite Heimgateway (2, 3) dem ersten (1, 2) benachbart ist, wenn er sich in Reichweite der Funkkommunikation befindet.

3. Verfahren zur Verwaltung von Warnungen nach Anspruch 1, **dadurch gekennzeichnet, dass** es einen Schritt des Beziehens mindestens einer Kennung von einem benachbarten Heimgateway aufweist, der sich in einem Abstand unter dem Schwellenabstand befindet.

4. Verfahren zur Verwaltung von Warnungen nach Anspruch 1, **dadurch gekennzeichnet, dass** der Schritt des Detektierens einer Verschlechterung (E1) direkt durch den ersten Heimgateway (1) durchgeführt wird.

5. Verfahren zur Verwaltung von Warnungen nach Anspruch 1, **dadurch gekennzeichnet, dass** der Schritt des Detektierens einer Verschlechterung (E21, E30) durch Empfang mindestens einer Warnmeldung (ALT1, ALT2) durchgeführt wird.

6. Verfahren zur Verwaltung von Warnungen nach Anspruch 1, **dadurch gekennzeichnet, dass** die Warnmeldung (ALT) eine eindeutige Identifikation der Meldung umfasst.

7. Vorrichtung, die geeignet ist, Warnmeldungen in Bezug auf die Detektion einer lokalen Erscheinung in einem Weitverkehrs-Kommunikationsnetzwerk (5) zu senden, wobei die lokale Erscheinung die Hardware- und/oder Softwareressourcen eines ersten Heimgateways (1, 2) verschlechtern kann, aufweisend die folgenden Module:
- ein Modul zur Detektion (TTSUR) einer Verschlechterung in Verbindung mit der lokalen Erscheinung;
- ein Modul (WiFI, DECT, CATIQ, NOTIF) zur Sendung einer Warnmeldung (ALT) für eine Übernahme der lokalen Erscheinung durch mindestens einen zweiten Heimgateway (2, 3), der dem ersten Heimgateway (1, 2) benachbart ist, die Warnmeldung (ALT) umfassend:
- eine Lokalisierung des ersten Heimgateways (E0), und
- einen Zähler (N) bezogen auf die maximale Anzahl von Neusendungen der Warnmeldung;
- ein Modul zur Überprüfung, dass der Wert des Zählers (N) bezogen auf die maximale Anzahl von Neusendungen der Warnmeldung einen Schwellenwert (E24) nicht erreicht hat;
- ein Modul zur Änderung (E24) des Werts des Zählers.

8. Heimgateway (1, 2, 3) umfassend eine Vorrichtung nach Anspruch 7.

9. Computerprogramm umfassend Code-Anweisungen für die Durchführung des Verfahrens zur Verwaltung von Warnungen nach Anspruch 1, wenn diese von einem Prozessor ausgeführt wird.

## Claims

1. Method for managing alerts relating to the detection of a local phenomenon in a wide area communications network (5) comprising at least one first home gateway (1,2) and one second home gateway (2,3) said near to said first home gateway said gateways each comprising a radio communication module (WIFI,DECT) for communicating wirelessly, the local phenomenon being liable to damage the hardware and/or software resources of the first or second home gateway where the process performs the following steps:
- detection (E1, E22), by the first home gateway (1,2), of damage linked to the local phenomenon;
- sending (E4, E25), by said first home gateway (1,2), of an alert message (ALT1, ALT2) on the radio communication module for management of the local phenomenon by at least one second home gateway (2,3), near said first home gateway, the alert message (ALT) comprising:
- a location of the first home gateway (E0) and
- a counter (N) relating to the maximum number of resends of the alert message;
- reception, by said second home gateway, of the alert message, and if the value of the counter (N) has not reached a threshold value (E24):
- modification (E24) of the value of the counter,
- re-sending (E25), by said second home gateway (1,2), of the alert message (ALT1,ALT2) on the radio communication module.

2. Alert management method according to Claim 1, **characterized in that** the second home gateway (2,3) is near the first (1,2) if it is located within the range of the radio communication.

3. Alert management method according to claim 1, **characterized in that** it includes a step of acquiring at least one identifier of a nearby home gateway situated at a distance shorter than a threshold distance.

4. Alert management method according to Claim 1, **characterized in that** the step (E1) of detecting damage is performed directly by the first home gateway (1).

5. Alert management method according to Claim 1, **characterized in that** the step (E21, E30) of detecting damage is performed by reception of at least one alert message (ALT1, ALT2).

6. Alert management method according to Claim 1, **characterized in that** alert message (ALT) comprises a unique message identification.

7. Appliance able to send alert messages relating to the detection of a local phenomenon in a wide area communications network (5), the local phenomenon being liable to damage the hardware and/or software resources of a first home gateway (1,2), including the following modules:
- a module (TTSUR) for detecting damage linked to the local phenomenon;
- a module (WIFI, DECT, CATIQ, NOTIF) for sending an alert message (ALT) for management of the local phenomenon by at least one second home gateway (2,3), near the first home gateway (1,2), the alert message (ALT) comprising:
- a location of the first home gateway (E0) and
- a counter (N) relating to the maximum number of resends of the alert message;
- a module for verifying that the value of the counter (N) relating to the maximum number of resends of the alert message has not reached a threshold value (E24),
- a module for modifying (E24) the value of the counter.

8. Home gateway (1,2,3) comprising an appliance according to Claim 7.

9. Computer program including code instructions for implementing the alert management method according to Claim 1 when this implementation is executed by a processor.
